# EUROPÄISCHE PATENTSCHRIFT

(11) **EP 2 746 031 B1**
(45) Veröffentlichungstag und Bekanntmachung des Hinweises auf die Patenterteilung: **04.11.2020**
(21) Anmeldenummer: 13198104.5
(22) Anmeldetag: 18.12.2013
(51) Int. Cl.: B29C 63/00, B29C 65/48, A47B 96/20

(54) **Kantenleiste und Verfahren zur Herstellung einer Kantenleiste**
Edge strip and method for the production of an edge strip
Baguette de bordure et procédé de fabrication d'une baguette de bordure

(30) Priorität: 19.12.2012 DE 102012112606
(43) Veröffentlichungstag der Anmeldung: 25.06.2014
(73) Patentinhaber: SURTECO GmbH, 86647 Buttenwiesen (DE)
(72) Erfinder:
(74) Vertreter: von dem Borne, Andreas

(56) Entgegenhaltungen:
- WO-A1-2009/133175
- DE-A1-102007 023 982
- US-A- 6 103 152
- US-A1- 2003 182 833

## Beschreibung

Die Erfindung betrifft ein Verfahren zur Herstellung einer Kantenleiste für die Schmalflächenbeschichtung von plattenförmigen Werkstücken, insbesondere von Möbelplatten, mit zumindest einer frontseitigen Deckschicht und einer rückseitigen Schmelzschicht zum Befestigen der Kantenleiste an dem Werkstück. Solche Kantenleisten bzw. Deckleisten werden auch einfach als Kanten oder Kantenbänder oder auch als Umleimer bezeichnet. Bei den plattenförmigen Werkstücken bzw. Möbelplatten kann es sich insbesondere um Holzwerkstoffplatten, z. B. Spanplatten, Faserplatten oder dergleichen handeln. Es werden aber auch Platten aus anderen Werkstoffen sowie Verbundplatten umfasst.

Es ist grundsätzlich bekannt, zur Befestigung derartiger Kantenleisten auf beispielsweise Schmalseiten von Möbelplatten einen Schmelzklebstoff im Zuge der Befestigung bzw. unmittelbar vor der Befestigung auf die Deckleiste aufzutragen. Die Befestigung erfolgt in sogenannten Kantenbandanleimmaschinen. Bei einer solchen Befestigung der Deckleisten auf den Schmalseiten von Möbelplatten besteht ein ständiges Problem darin, dass eine sichtbare Fuge zwischen den Deckleisten und den Möbelplatten bzw. ihren Schmalseiten entstehen kann. Diese Fuge resultiert im Wesentlichen aus der Schmelzklebstoffschicht. Hinzu kommt regelmäßig eine Haftvermittlerschicht, welche eingesetzt wird, um die Deckleisten aus thermoplastischem Kunststoff auf die Schmalseiten von Möbelplatten zu befestigen.

Um den optischen Eindruck solcher verklebten Deckleisten zu verbessern, wurde vorgeschlagen einen eingefärbten Klebstoff zu verwenden, welcher gleichfarbig mit beispielsweise den Deckleisten sein kann. Problematisch ist in diesem Zusammenhang, dass Deckleisten in der Praxis in einer Vielzahl unterschiedlichster Farben bzw. Dekorationen angeboten werden, so dass sich bei der Befestigung solcher Deckleisten an beispielsweise Möbelplatten das Problem ergibt, dass dann bei der Befestigung vor Ort jeweils ein geeigneter Schmelzklebstoff zur Verfügung stehen muss.

Zur Vermeidung der beschriebenen unansehnlichen Schmelzklebstofffugen, welche insbesondere bei Benutzung bzw. Reinigung deutlich sichtbar werden, wurde außerdem vorgeschlagen, vollständig auf einen Schmelzklebstoff zur Befestigung der Deckleiste an der Möbelplatte zu verzichten. Aus der EP 1 163 864 B1 ist daher eine klebstofffreie Verbindung zwischen einer Deckleiste bzw. Kunststoffkante und einer Möbelplatte bekannt, das heißt, die Kunststoffkante wird unmittelbar und ohne Kleber auf die Möbelplatte gefügt. Dazu wird die Oberfläche der Kunststoffkante durch Laserstrahlung aufgeschmolzen, so dass eine Laserschweißverbindung einer kleberfreien Kunststoffplatte mit der Möbelplatte erfolgt.

Alternativ wird in der EP 1 852 242 A1 vorgeschlagen, eine Deckleiste mit einer einseitig auf die Deckleiste aufgebrachten Schmelzklebstoffschicht zu verwenden, wobei die Deckleiste mit der Schmelzklebstoffschicht im Wege der Coextrusion hergestellt ist. Dabei ist die Schmelzklebstoffschicht bevorzugt in der Farbe der Deckleiste eingefärbt, so dass sich die Deckleiste an einer Möbelplatte befestigen lässt, ohne dass eine sichtbare Klebstofffuge erkennbar ist. Der Schmelzklebstoff bzw. die Schmelzklebstoffschicht ist dabei mittels Laserstrahlung aufschmelzbar bzw. aktivierbar.

In der WO 2009/26977 A1 wird für die Verarbeitung einer Kantenleiste mittels Laserstrahlung vorgeschlagen, eine Kantenleiste mit einer Schmelzschicht zu verwenden, welche sowohl polare als auch unpolare Anteile im Molekülaufbau enthält.

Schließlich beschreibt die EP 2 366 540 A1 eine Kantenleiste aus thermoplastischem Kunststoffmaterial in mehrschichtiger Struktur, insbesondere für Möbelplatten, welche dadurch gekennzeichnet ist, dass diese über eine im Schmelzzustand hochfließfähige Schmelzschicht verfügt, die eine vergleichbare Härte und Schmelztemperatur zu mindestens einer weiteren Schicht besitzt, so dass insgesamt die Kantenleiste eine konstante Härte und Schmelztemperatur aufweisen soll. Optional soll die Schmelzschicht und/oder die Zwischenschicht eine Schaumstruktur aufweisen. Dadurch soll sich die Energieaufnahme der Schmelzschicht, z. B. nach Laserstrahlung erhöhen.

Es besteht folglich insgesamt das Bedürfnis, Kantenleisten für die Schmalflächenbeschichtung von plattenförmigen Werkstücken, insbesondere von Möbelplatten zur Verfügung zu stellen, welche mit einer Schmelzschicht bzw. Funktionalschicht versehen sind, die mittels geeigneter Quellen, z. B. mittels Laserstrahlung oder auch Plasmastrahlung aufgeschmolzen und mittels Andruck dauerhaft auf die Möbelplatte aufgebracht werden kann. Erste Ausführungsformen haben sich in der Praxis etabliert. Die bekannten Leisten sind jedoch weiterentwicklungsfähig. So ist beispielsweise die Wasser-Fugendichtigkeit der bekannten Möbelplatten verbesserungsfähig. Außerdem besteht das Bedürfnis, die erforderlichen Energieleistungen zum Schmelzen bzw. Aktivieren und Kleben der Kanten zu verringern. Die aus der Praxis bekannten Schmelzschichten bzw. Funktionalschichten für z. B. eine Laseraktivierung sind in der Regel mit verschiedenen Additiven versehen, so dass es sich um relativ kostenaufwendige Produkte handelt, die einen hohen Kostenanteil am Gesamtprodukt aufweisen. Problematisch ist die Verarbeitung auch bei dünnen Kantenbändern, z. B. mit einer Dicke von weniger als 0,6 mm. Hier kann sich bei der Verarbeitung ein Abzeichnen der Spanstruktur auf der Kantenoberseite zeigen, wodurch der Dekoreffekt und die Oberfläche beeinträchtigt werden können. Schließlich sind Transport und Lagerung von beschichteten Kantenbändern bei üblichen klimatischen Bedingungen häufig problematisch, und zwar aufgrund der Klebeneigung der z. B. als Schmelzklebstoffschicht ausgebildeten Schmelzschicht. Die Verarbeitung führt aufgrund des hohen Klebeverhaltens der Schmelzschicht im Übrigen zu einem hohen technologischen Aufwand um das Anhaften auf den Anlagen und Werkzeugen sowie das Anhaften auf den Anlagen und Werkzeugen sowie das Anhaften im weiteren Prozess zu verhindern.

Im Übrigen wird in der US 2003/0182833 A1 eine Verkleidungskappe zur Verkleidung von beleuchteten Gegenständen, z. B. Leuchtschriften oder dergleichen, beschrieben. Dabei kommen Abdeckelemente zum Einsatz, die mit einem druckaktivierbaren Klebstoff ausgerüstet sind. Zusätzlich zu dieser Klebstoffschicht wird in einem Mehrschichtaufbau der Einsatz einer Schaumschicht erwähnt, die gegebenenfalls auch mit Mikrohohlkugeln ausgerüstet sein kann.

Schließlich beschreibt die DE 10 2007 023 982 A1 einen Schmelzklebstoff mit reduzierter Dichte, wobei der Schmelzklebstoff expandierte Mikrohohlkugeln enthält. Durch die Inkorporierung der expandierten Mikrohohlkugeln in dem Schmelzklebstoff sollen sich nicht nur dessen Dichte und Eigengewicht signifikant reduzieren lassen, sondern dessen Verarbeitungs- und Gebrauchseigenschaften sollen auch verbessert werden.

Der Erfindung liegt die Aufgabe zugrunde, ein Verfahren anzugeben, mit dem sich Kantenleisten für die Schmalflächenbeschichtung von plattenförmigen Werkstücken, insbesondere von Möbelplatten, kostengünstig herstellen und solche Kantenleisten einwandfrei verarbeiten lassen.

Zur Lösung dieser Aufgabe lehrt die Erfindung bei einem gattungsgemäßen Verfahren zum Herstellen einer Kantenleiste der eingangs beschriebenen Art, dass einem thermoplastischen Basiskunststoff Mikrohohlkugeln, die aus einer mit einem Gas gefüllten Kunststoffhülle bestehen, zugegeben werden und aus dieser Ausgangsmischung die Schmelzschicht erzeugt und auf die Deckschicht aufgebracht wird, wobei dem Basiskunststoff nicht expandierte Mikrohohlkugeln zugegeben werden, welche im Zuge der Erzeugung der Schmelzschicht expandieren.

Es wurde grundsätzlich bereits vorgeschlagen, eine Schmelzschicht einer Kantenleiste mit einer Schaumstruktur zu versehen, wobei die Schaumstruktur sowohl durch physikalisches als auch durch chemisches Schäumen der polymeren Schicht erzeugt werden kann (vgl. EP 2 366 540 A1). Die Erfindung hat jedoch erkannt, dass der Einsatz klassischer Treibmittel (exotherme und endotherme chemischer Treibmittel oder auch physikalischer Treibmittel) in Schmelzschichten bzw. Schmelzklebstoffschichten problematisch ist. Insbesondere wenn es sich um Schmelzschichten mit extrem niedriger Schmelzezähigkeit und folglich um Schmelzschichten handelt, die auf hohe Fließfähigkeit optimiert sind, sind diese nicht in der Lage, den durch Treibmittel erzeugten Gasdruck (Gasbeladung) in der Schmelze zu halten, so dass eine gebildete Schaumstruktur sehr schnell in sich zusammenfällt. Davon ausgehend hat die Erfindung erkannt, dass sich eine Schaumstruktur in einer Schmelzschicht bzw. Funktionalschicht auf einfache und kostengünstige Weise schaffen lässt, indem in die Schmelzschicht Mikrohohlkugeln integriert werden, die auch als Microspheres oder Mikrosphären bezeichnet werden. Solche Mikrohohlkugeln sind grundsätzlich bekannt. Sie werden z. B. von der Firma AkzoNobel unter dem Markennamen Expancel® vermarktet. Bei Mikrohohlkugeln handelt es sich um (sphärische) Kunststoffkugeln, die aus einer polymeren Hülle bestehen, welche ein Gas einkapselt. Durch Erhitzung erhöht sich einerseits der Gasdruck im Innern der Hülle, andererseits erweicht die Hülle. Folglich vergrößert sich das Volumen bzw. Durchmesser der Mikrohohlkugeln im Zuge der Erwärmung, das heißt die Mikrohohlkugeln expandieren bei einer Erwärmung. Beim Abkühlen behalten die expandierten Hohlkugeln weitestgehend ihre expandierte Größe bei. Das Gas bleibt dabei dauerhaft eingeschlossen. Bei dem Gas kann es sich z. B. um Trimethylpentan handeln. Die Hülle kann aus einem Acrylat bestehen. Solche Microspheres werden in der Praxis z. B. bei Teppichunterlagen verwendet, um deren Griffigkeit zu verbessern. Außerdem können Sie bei Farben und Fugen- und Spachtelmassen eingesetzt werden, um das Gewicht zu reduzieren sowie die Verarbeitungseigenschaften zu verbessern.

Aus der DE 10 2010 062 669 A1 ist es beispielsweise im Zusammenhang mit der Herstellung von Klebebändern bekannt, Mikrohohlkugel einzusetzen. Ähnliche Anwendungsbereiche werden in der DE 39 18 616 A1, der EP 0 257 984 und der WO 2005/121267 A1 beschrieben. Im Zusammenhang mit Schmelzklebstoffen wird der Einsatz von Mikrohohlkugeln z. B. in der WO 2007/081645 A2 oder auch in der DE 10 2007 023 982 A1 erwähnt.

Die Erfindung geht nun von der Erkenntnis aus, dass sich durch den Einsatz von grundsätzlich bekannten Mikrohohlkugeln die Herstellung und die Verarbeitung von Kantenleisten für die Schmalflächenbeschichtung von plattenförmigen Werkstücken, insbesondere vom Möbelplatten erheblich verbessern lassen. Denn durch den Einsatz von in der Wärme expandierbaren, polymeren Mikrohohlkugeln lassen sich die Probleme mit klassischen Treibmitteln zur Erzeugung von Schaumstrukturen auf einfache Weise vermeiden, da die Mikrohohlkugeln nicht auf die Schmelzezähigkeit des Polymers angewiesen sind, um eine Schaumstruktur zu stabilisieren. Der hierbei gebildete überwiegend geschlossenzellige Schaum, erfüllt daher die wesentlichen Eigenschaften, die für die Herstellung und Verarbeitung einer Kantenleiste gefordert werden.

Zunächst einmal lässt sich das Raumgewicht (die Dichte) der Schmelzschicht bzw. Funktionalschicht um 10 % bis zu 80 % reduzieren. Dieses führt wiederum zu einer deutlichen Kostensenkung im Zuge der Herstellung der Kantenleiste. Durch die eingesetzten Mikrohohlkugeln lässt sich der Energieeintrag durch entsprechende Quellen, wie z. B. Laserstrahlung, Plasmastrahlung oder (andere) Wärmequellen verbessern. Außerdem lässt sich durch die expandierten Hohlkugeln im Polymer die Viskosität erniedrigen, so dass sich die rheologischen Eigenschaften (Schmelzewirksamkeit) verbessern lassen. Vorteilhaft ist auch die Tatsache, dass ein verbesserter Ausgleich von Unebenheiten der Verklebungspartner, z. B. der Holzwerkstoffplatte, erfolgt. Dieses ist insbesondere bei dünnen Kantenleisten vorteilhaft, da ein "Durchtelegraphieren" der Holzstruktur vermieden wird. Die Verklebungsgüte oder Adhäsion wird durch die expandierten Microspheres nicht beeinträchtigt. Es wird eine Verbesserung der Fugendichtigkeit durch "inneren Nachdruck" der expandierten Microspheres erreicht. Die erforderliche Menge der Schmelzschicht bzw. die Auftragsmenge lässt sich bei gleicher Verklebungsgüte reduzieren. Der Einsatz der Mikrohohlkugeln hat außerdem den Vorteil, dass Block- und Klebeeigenschaften der Schmelzschicht in der Rolle reduziert werden, so dass die Handhabung im Zuge des Transports und der Lagerung verbessert wird. Es lassen sich bleibende, weiche Schaumpolster nach dem Verkleben der Kanten auf einer Möbelplatte erzeugen. Durch die Reduzierung der Klebeneigung bekannter Schmelzschichten lässt sich der Prozess bei der Applikation gegenüber Metallwerkzeugen, Führungen oder sonstiger schmelzeberührender Anlagenteile verbessern. Außerdem lässt sich die mit Microspheres beladene Schmelzeschicht im Zuge der Herstellung der Kantenleiste hervorragend verarbeiten, so dass eine einwandfreie Herstellung der Kantenleiste durch Coextrusion, Post-Coextrusion oder auch durch eine Nachbeschichtung gelingt.

Die bevorzugt verwendeten Mikrohohlkugeln besitzen im nicht expandierten Zustand einen Durchmesser von 5 µm bis 60 µm, vorzugsweise 10 µm bis 40 µm. Bei Temperaturen von z. B. 125 °C bis 180 °C erfolgt ein Erweichen der Hülle und damit die Expansion der Kugeln durch das eingeschlossene Gas. Dieser Prozess endet bei Temperaturen von 155 °C bis 220 °C. Nach der Expansion haben die expandierten Mikrohohlkugeln bevorzugt einen Durchmesser von 20 µm bis 180 µm, vorzugsweise 30 µm bis 140 µm, z. B. 40 µm bis 140 µm. Beim Abkühlen behalten die expandierten Hohlkugeln weitestgehend ihre expandierte Größe bei. Der mittlere Zelldurchmesser im aufgeschäumten, d. h. expandierten Zustand beträgt vorzugsweise 10 µm bis 100 µm, z. B. 20 µm bis 80 µm. Es liegt dabei im Rahmen der Erfindung, dass in die Schmelzschicht expandierte Mikrohohlkugeln integriert sind. Das bedeutet, dass die Mikrohohlkugeln im Zuge der Herstellung der Schmelzschicht zugegeben werden und bereits expandiert sind oder im Zuge der Herstellung der Schmelzschicht bereits expandieren, so dass die Kantenleiste eine Schmelzschicht mit expandierten Mikrohohlkugeln aufweist. Damit liegen die Mikrohohlkugeln auch im montierten Zustand der Kantenleiste an der Möbelplatte im expandierten Zustand vor, so dass die eingangs beschriebenen vorteilhaften Eigenschaften erreicht werden.

Die (fertige) Schmelzschicht weist dabei (nach der Herstellung der Leisten aber vor der Verarbeitung) eine Dicke von vorzugsweise mehr als 0,1 mm auf. Besonders bevorzugt weist die Schmelzschicht der Kantenleiste eine Dicke von 0,4 mm bis 1,5 mm auf. Bei der Schmelzschicht kann es sich um eine Schmelzklebstoffschicht (Hotmelt) oder auch um eine schmelzklebstoffartige Funktionalschicht handeln, z. B. basierend auf EVA, APAO, TPU, CoPA, PE, HDPE, PP, PO, TPE-Blockcopolymere (z. B. SBS, SEBS, SEPS). Solche schmelzklebstoffartigen Funktionalschichten bzw. Schmelzschichten können weitere für die Schmelzverklebung geeignete Polymere und modifizierte Blends aus diesen Polymeren aufweisen. Außerdem können Additive vorgesehen sein, welche das Aufschmelzen mit bestimmten Strahlungsquellen optimieren sollen, z. B. NIR-Absorber für eine Laseraktivierbarkeit, z. B. wenn Diodenlaser mit einer Wellenlänge von 800 nm bis 1100 nm verwendet werden. Ferner können diese Schmelzschichten Einfärbungen, UV-Schutz, Antioxidantien, Füllstoffe, Hydrocarbone, Wachse und Fließhilfen aufweisen. Jedenfalls wird aus den beschriebenen Bestandteilen ein thermoplastischer Basiskunststoff bzw. eine polymere Funktionalschichtrezeptierung hergestellt, welcher dann erfindungsgemäß Mikrohohlkugeln zugegeben werden. Aus dieser Ausgangsmischung (aus der polymeren Funktionalschichtrezeptierung und den Mikrohohlkugeln) wird dann die Schmelzschicht erzeugt und auf die Deckschicht aufgebracht.

Die im Rahmen der Erfindung erzeugte Schmelzschicht wird z. B. direkt im Zuge der Herstellung der Kantenleiste durch Coextrusion oder Post-Coextrusion mit der Deckschicht hergestellt. Alternativ kann die Schmelzschicht durch Nachbeschichtung auf die Deckschicht aufgebracht werden.

Dabei werden dem thermoplastischen Basiskunststoff bzw. der polymeren Funktionalschichtrezeptierung nicht expandierte Mikrohohlkugeln zugegeben. Im Zuge der Erzeugung der Schmelzschicht expandieren diese, so dass dann eine Kantenleiste mit einer Schmelzschicht mit expandierten Mikrohohlkugeln vorliegt. Dabei weist die (geschäumte) Schmelzschicht mit den expandierten Mikrohohlkugeln eine Dichte von vorzugsweise 0,2 g/cm³ bis 0,9 g/cm³ auf.

Die Mikrospheres können als Pulver oder in einem polymeren Trägermaterial gebunden, vor oder bei der Verarbeitung der jeweiligen polymeren Funktionalschicht Ausführung in der gewünschten Menge beigemischt werden und mittels Extruder (Plastifizierung) einem Auftragssystem (Nachbeschichtung, Post-Coextrusion oder Coextrusion) zugeführt werden. Abhängig von der Polymerauslegung der Funktionalschicht, die z. B. einen Schmelzpunkt unterhalb von 120 °C bis 145 °C aufweisen kann, ist auch die Verwendung eines Compounds aus der Funktionalschichtrezeptierung und der Mikrospheres möglich.

Der Anteil der (nicht expandierten) Mikrohohlkugeln als Treibmittel in der Ausgangsmischung bzw. in der polymeren Funktionalschichtrezeptierung weist vorzugsweise 0,1 % bis 20 %, z. B. 0,5 % bis 5 % (bezogen auf das Gewicht) auf.

Eine Kantenleiste mit Deckschicht und Schmelzschicht (Funktionsschicht) lässt sich bevorzugt im Wege der Coextrusion herstellen, wobei die Mikrohohlkugeln während der Coextrusion expandieren. Die Düsentemperatur kann z. B. 150°C bis 250 °C, vorzugsweise 190°C bis 240°C betragen. Das Verfahren kann dabei so geführt werden, dass der Aufschäumgrad 10 % bis 50 %, vorzugsweise 20 % bis 40 %. z. B. 25 % bis 35 % beträgt. Aufschäumgrad meint das Verhältnis des Blasenvolumens zum Gesamtvolumen.

Die durch das erfindungsgemäße Verfahren hergestellte Kantenleiste kann verwendet werden in einem Verfahren zum Befestigen einer solchen Kantenleiste an einem plattenförmigen Werkstoff, insbesondere an einer Möbelplatte. Dieses Verfahren ist dadurch gekennzeichnet, dass die mit dem Mikrohohlkugeln versehene Schmelzschicht mit einer Quelle aufgeschmolzen und die Kantenleiste auf die Schmalfläche gedrückt wird. Bei der Quelle kann es sich z. B. um eine Wärmequelle, z. B. Heißluftquelle oder auch Wärmestrahlungsquelle handeln. Bevorzugt kommt jedoch eine Laserstrahlungsquelle oder auch eine Plasmaquelle zum Einsatz.

Im Rahmen der Erfindung kommt es folglich in besonderem Maße auf die Erzeugung einer Schmelzschicht bzw. Funktionalschicht zum Befestigen der Kantenleiste an dem Werkstück an, wobei eine solche Schmelzschicht rückseitig auf der Deckschicht angeordnet ist. Rückseitig meint folglich die der zu beschichteten Möbelplatte zugewandte Seite der Kantenleiste.

Optional liegt es jedoch auch im Rahmen der Erfindung, eine solche Schicht ergänzend frontseitig auf die Deckschicht aufzubringen bzw. in die Deckschicht zu integrieren, so dass mit Hilfe dieser Schmelzschicht eine Haptikschicht erzeugt wird, wobei in diese Haptikschicht dann in der beschriebenen Weise expandierte Mikrohohlkugeln integriert sind. Auf diese Weise lässt sich eine Kantenleiste mit besonderen haptischen Eigenschaften, z. B. mit einer lederähnlichen Struktur herstellen. Die Herstellung dieser Haptikschicht kann in der gleichen Weise erfolgen, die Herstellung der beschriebenen Schmelzschicht.

## Patentansprüche

1. Verfahren zum Herstellen einer Kantenleiste für die Schmalflächenbeschichtung von plattenförmigen Werkstücken, insbesondere von Möbelplatten, mit zumindest einer frontseitigen Deckschicht und einer rückseitigen Schmelzschicht zum Befestigen der Kantenleiste an dem Werkstück, wobei einem thermoplastischen Basiskunststoff Mikrohohlkugeln, die aus einer mit einem Gas gefüllten Kunststoffhülle bestehen, zugegeben werden und aus dieser Ausgangsmischung die Schmelzschicht erzeugt und auf die Deckschicht aufgebracht wird,
wobei dem Basiskunststoff nicht expandierte Mikrohohlkugeln zugegeben werden, welche im Zuge der Erzeugung der Schmelzschicht expandieren.

2. Verfahren nach Anspruch 1, **dadurch gekennzeichnet, dass** die Schmelzschicht mit expandierten Mikrohohlkugeln eine Dichte von 0,2 g/cm³ bis 0,9/cm³ aufweist.

3. Verfahren nach Anspruch 1 oder 2, **dadurch gekennzeichnet, dass** die Mikrohohlkugeln im nicht expandierten Zustand einen Durchmesser von 5 µm bis 60 µm, vorzugsweise 10 µm bis 40 µm, aufweisen.

4. Verfahren nach einem der Ansprüche 1 bis 3, **dadurch gekennzeichnet, dass** die Mikrohohlkugeln im expandierten Zustand einen Durchmesser von 20 µm bis 180 µm, vorzugsweise 30 µm bis 140 µm, aufweisen.

5. Verfahren nach einem der Ansprüche 1 bis 4, **dadurch gekennzeichnet, dass** die Schmelzschicht eine Dicke von mehr als 0,1 mm aufweist, vorzugsweise etwa 0,4 mm bis 1,5 mm.

6. Verfahren nach einem der Ansprüche 1 bis 5, **dadurch gekennzeichnet, dass** auf die frontseitige Deckschicht eine Schmelzschicht als Haptikschicht aufgebracht wird , in welche Mikrohohlkugeln integriert sind.

7. Verfahren nach einem der Ansprüche 1 bis 6, **dadurch gekennzeichnet, dass** die Schmelzschicht durch Coextrusion oder Post-Coextrusion mit der Deckschicht oder durch Nachbeschichtung der Deckschicht erzeugt und auf die Deckschicht aufgebracht wird.

8. Verfahren nach einem der Ansprüche 1 bis 7, **dadurch gekennzeichnet, dass** dem Basiskunststoff nicht expandierte Mikrohohlkugeln zugegeben werden, welche im Zuge der Erzeugung der Schmelzschicht expandieren.

## Claims

1. A method for producing an edge strip for the coating of narrow surfaces of panel-shaped workpieces, in particular furniture panels, with at least one front-side cover layer and one rear-side melt layer for fixing the edge strip to the workpiece, wherein hollow microspheres consisting of a plastic casing filled with a gas are added to a thermoplastic base plastic and a melt layer is created from this starting mixture and applied onto the cover layer,
wherein non-expanded hollow microspheres are added to the base plastic, which expand in the course of creating the melt layer.

2. The method according to claim 1, **characterized in that** the melt layer with expanded hollow microspheres has a density of 0.2 g/cm³ to 0.9 g/cm³.

3. The method according to claim 1 or 2, **characterized in that** the hollow microspheres in the non-expanded state have a diameter of 5 µm to 60 µm, preferably 10 µm to 40 µm.

4. The method according to any one of claims 1 to 3, **characterized in that** the hollow microspheres in the expanded state have a diameter of 20 µm to 180 µm, preferably 30 µm to 140 µm.

5. The method according to any one of claims 1 to 4, **characterized in that** the melt layer has a thickness of more than 0.1 mm, preferably about 0.4 mm to 1.5 mm.

6. The method according to any one of claims 1 to 5, **characterized in that** a melt layer is applied onto the front-side cover layer as a haptic layer in which hollow microspheres are integrated.

7. The method according to any one of claims 1 to 6, **characterized in that** the melt layer is created by coextrusion or post-extrusion with the melt layer or by post-coating and applied onto the cover layer.

8. The method according to any one of claims 1 to 7, **characterized in that** non-expanded hollow microspheres are added to the base plastic, which expand in the course of creating the melt layer.

## Revendications

1. Procédé de fabrication d'une baguette de rive pour le revêtement de surface étroite de pièces en forme de panneau, en particulier de panneaux de meuble, avec au moins une couche de couverture avant et une couche de fusion arrière pour fixer la baguette de rive à la pièce, sachant que des microsphères creuses, qui sont composées d'une enveloppe de plastique remplie d'un gaz, sont ajoutées à une matière thermoplastique de base et la couche de fusion est produite à partir de ce mélange initial et est appliquée à la couche de couverture,
sachant que des microsphères creuses non expansées sont ajoutées à la matière plastique de base, lesquelles se dilatent au cours de la production de la couche de fusion.

2. Procédé selon la revendication 1, **caractérisé en ce que** la couche de fusion avec des microsphères creuses expansées comporte une épaisseur de 0,2 g/cm³ à 0,9/cm³.

3. Procédé selon la revendication 1 ou 2, **caractérisé en ce que** les microsphères creuses à l'état non dilaté comportent un diamètre de 5 µm à 60 µm, de préférence 10 µm à 40 µm.

4. Procédé selon l'une quelconque des revendications 1 à 3, **caractérisé en ce que** les microsphères creuses en expansion comportent un diamètre de 20 µm à 180 µm, de préférence 30 µm à 140 µm.

5. Procédé selon l'une quelconque des revendications 1 à 4, **caractérisé en ce que** la couche de fusion comporte une épaisseur de plus de 0,1 mm, de préférence d'environ 0,4 mm à 1,5 mm.

6. Procédé selon l'une quelconque des revendications 1 à 5, **caractérisé en ce qu'**une couche de fusion est appliquée en tant que couche haptique sur la couche de couverture avant, dans laquelle sont intégrées des microsphères creuses.

7. Procédé selon l'une quelconque des revendications 1 à 6, **caractérisé en ce que** la couche de fusion est produite par coextrusion ou post-coextrusion avec la couche de couverture ou par revêtement ultérieur de la couche de couverture et est appliquée sur la couche de couverture.

8. Procédé selon l'une quelconque des revendications 1 à 7, **caractérisé en ce qu'**à la matière plastique de base sont ajoutées de microsphères creuses non expansées, lesquelles se dilatent au cours de la production de la couche de fusion.
